Europäisches Patentamt

European Patent Office

Office européen des brevets

(11) Numéro de publication : **0 061 955**
**B1**

(12) **FASCICULE DE BREVET EUROPÉEN**

(45) Date de publication du fascicule du brevet :
20.08.86

(21) Numéro de dépôt : 82400469.1

(22) Date de dépôt : 15.03.82

(51) Int. Cl.⁴ : **G 02 B   6/38**, G 03 B 39/06

(54) **Dispositif et procédé de raccordement de fibres optiques à une caméra à balayage de fente.**

(30) Priorité : 20.03.81 FR 8105644

(43) Date de publication de la demande :
06.10.82 Bulletin 82/40

(45) Mention de la délivrance du brevet :
20.08.86 Bulletin 86/34

(84) Etats contractants désignés :
DE GB IT NL SE

(56) Documents cités :
FR-A- 2 402 218
US-A- 3 555 555
US-A- 4 201 444
US-A- 4 204 310
US-A- 4 217 030
US-A- 4 233 724
COMPUTER DESIGN, vol. 19, no. 11, novembre 1980
PONTIAC, I11. (US) W.L. SCHUMACHER: "Multipurpose connector mixes electrical and optical signals"
pages 39-42
OPTICAL FIBER TECHNOLOGY, Globe D, 1976, IEEE
NEW YORK (US) M. BORNER et al.: "Lösbare Steckverbindung für Ein-Mode-Glasfaserlichtwellenleiter"
pages 272-273

(73) Titulaire : COMMISSARIAT A L'ENERGIE ATOMIQUE
Etablissement de Caractère Scientifique Technique
et Industriel
31/33, rue de la Fédération
F-75015 Paris (FR)

(72) Inventeur : Bouchu, Michel
8, Chemin du Parc
F-95230 Choisy Sous Montmorency (FR)
Inventeur : Chopineaux, René
120, Boulevard Aristide Briand
F-94500 Champigny Sur Marne (FR)
Inventeur : Gauthier, Jean Pierre
10, Allée des Magnolias
F-77400 Pomponne (FR)

(74) Mandataire : Mongrédien, André et al
c/o BREVATOME 25, rue de Ponthieu
F-75008 Paris (FR)

## Description

La présente invention a pour objet un dispositif de raccordement d'une pluralité de sondes de mesure à une caméra optoélectronique à balayage de fente au moyen de fibres optiques.

De façon plus précise, l'invention a pour objet un dispositif de raccordement dans lequel on raccorde, d'une part deux séries de fibres optiques par une simple juxtaposition de l'une des extrémités des fibres optiques de l'une des deux séries à l'une des extrémités des fibres optiques de l'autre série, et d'autre part la deuxième extrémité des fibres optiques de l'une des deux séries à l'entrée de la caméra. Avec une caméra optoélectronique, le raccordement de ces deuxièmes extrémités de fibres optiques s'effectue sur le tube convertisseur d'images de la caméra comportant, sur son entrée, un hublot de fibres optiques.

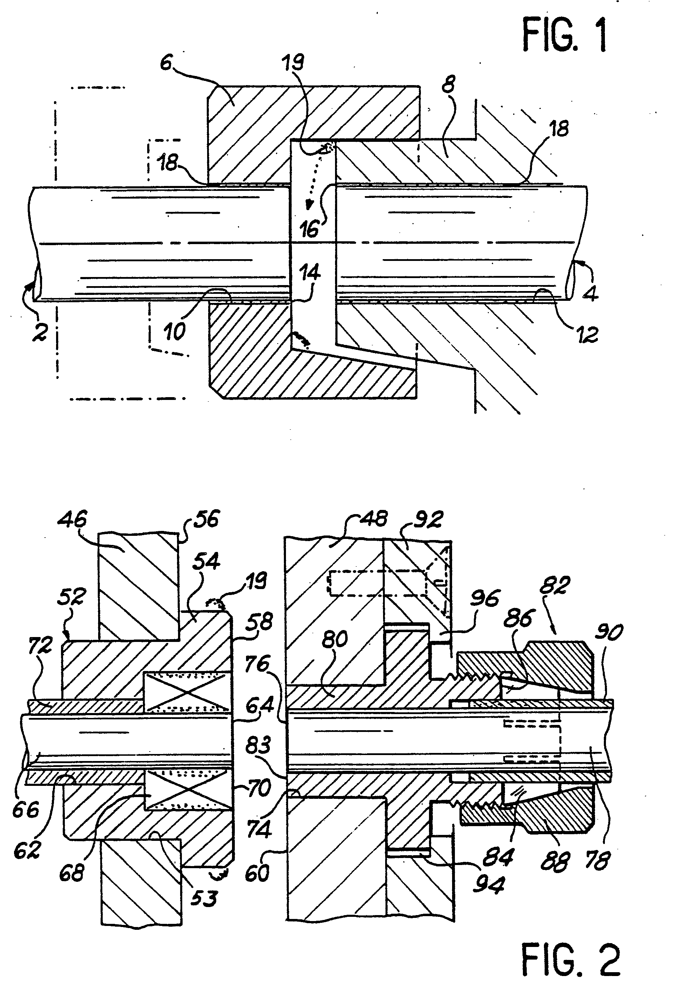

Les dispositifs, permettant le raccordement de deux séries de fibres optiques par simple juxtaposition de l'une des extrémités des fibres optiques de l'une des deux séries à l'une des extrémités des fibres optiques de l'autre série, connus jusqu'à ce jour (cf. à titre d'exemple, US-A-4 204 310, US-A-4 217 030 ou US-A-4 233 724), présentent un certain nombre d'inconvénients. De façon à expliciter ces inconvénients, on a schématisé sur la figure 1 une partie de l'un de ces dispositifs.

Sur cette figure, on a représenté le raccordement de deux fibres optiques 2 et 4 au moyen d'un dispositif comprenant, entre autre, une pièce métallique 6 en forme de U dans laquelle peut venir s'emboîter une autre pièce métallique 8. Le fond de la pièce 6 ainsi que toute la pièce 8 sont percés d'un alésage respectivement 10 et 12 permettant de recevoir respectivement la fibre optique 2 et la fibre optique 4. Sur cette figure, on n'a représenté que la partie du dispositif concernant le raccordement de deux fibres optiques, mais bien entendu ce dispositif peut comprendre plusieurs pièces 6 et 8 servant au raccordement simultané de plusieurs fibres optiques 2 et 4.

Avant d'emboîter les deux pièces 6 et 8 l'une dans l'autre, on positionne les fibres optiques 2 et 4 dans les alésages 10 et 12 de façon que l'une des extrémités des fibres optiques arrive en affleurement avec les extrémités 14 et 16 des alésages, puis on fixe les fibres optiques au moyen d'un adhésif, ou colle 18 et, enfin, on polit l'extrémité des fibres optiques 2 et 4 ainsi que la colle 18. Après le polissage des extrémités des fibres optiques et de la colle, les deux pièces 6 et 8 peuvent être emboîtées et fixées l'une à l'autre.

Etant donné la forme respective des pièce 6 et 8 et en particulier celle de la pièce 6, on conçoit que le nettoyage des parties des deux pièces pouvant être placées au contact l'une de l'autre ne soit pas aisé à pratiquer et que, quelle que soit la façon dont celui-ci est fait, il est toujours possible que subsiste entre ces régions des particules 19, résultant du polissage de l'extrémité des fibres optiques et de la colle. La présence de telles particules risque de perturber considérablement la transmission de la lumière entre les deux fibres optiques 2 et 4.

En effet, on sait qu'une caméra à balayage de fente, reliée à plusieurs sondes de mesure par l'intermédiaire d'un dispositif de raccordement permet d'étudier certains phénomènes physiques, et notamment de type explosif, en enregistrant d'une manière continue ledit phénomène en plusieurs points de l'espace sur un film photographique situé dans la caméra. L'analyse du film photographique sur lequel apparaissent les différentes mesures effectuées se fait en comparant chaque mesure à une mesure de référence caractérisant la voie de mesure utilisée, c'est-à-dire les fibres optiques la constituant. En conséquence, la présence de particules 19 pouvant perturber la mesure ne permet plus de faire cette analyse par simple comparaison avec la mesure de référence.

L'analyse de certains phénomènes physiques au moyen d'un film photographique placé dans une caméra optoélectronique a été décrite sous le titre « Mesure en hydrodynamique au moyen de sondes optiques et d'un enregistrement par caméra électronique à fente », pages 67 à 71, et sous le titre de « Sonde optique à étages pour la détection des écailles, enregistrement par fibre optique et caméra électronique à fente », pages 285 à 288, dans la publication « Proceeding of 13th International Congress on High Speed Photography and Photonics, Tokyo, 1978 ».

US-A-3 555 555 divulgue par ailleurs un dispositif d'enregistrement de signaux optiques éloignés au moyen d'au moins deux séries de fibres optiques (cf Figure 12), dans lequel les extrémités de fibres qui sont raccordées audit dispositif sont disposées de façon à former un agencement linéaire apte à balayer le support d'enregistrement qui reste fixe.

De plus, l'utilisation d'un dispositif de raccordement à une caméra du type à fente dans un environnement sévère nécessite d'une part, un démontage et un montage rapides du dispositif de raccordement et, d'autre part, un nettoyage de celui-ci lorsque le raccordement des différentes fibres optiques est réalisé.

La présente invention a justement pour objet un dispositif de raccordement de fibres optiques à une caméra du type à fente permettant de remédier à ces inconvénients et, en particulier, permettant d'éviter la présence de particules entre les fibres à raccorder, ces particules étant néfastes à la transmission de la lumière. De plus, ce dispositif de raccordement est démontable et montable rapidement.

De façon plus précise, l'invention a pour objet un dispositif de raccordement tel que défini dans la revendication 1.

Selon un mode préféré de réalisation du dispositif de raccordement selon l'invention, les moyens de positionnement de ladite autre extrémité desdites premières fibres comprennent, d'une part, un premier guide permettant de disposer les n premières fibres optiques suivant deux lignes parallèles puis, un deuxième guide permettant de disposer lesdites fibres suivant une même ligne droite et, d'autre part, une troisième pièce métallique en forme de demi-disque plat solidaire de la première pièce et munie de n encoches permettant de positionner et de maintenir ladite autre extrémité desdites premières fibres selon ladite ligne droite.

Selon un autre mode préféré de réalisation du dispositif de l'invention, les moyens de centrage des premières fibres optiques sont constitués de trois tiges métalliques cylindriques, régulièrement réparties dans les alésages des plots, et les moyens de fixation desdites premières fibres sont constitués par un adhésif présentant un comportement similaire à celui des deuxièmes fibres optiques vis-à-vis d'un polissage.

Selon un autre mode préféré de réalisation de l'invention, les moyens de centrage des deuxièmes fibres optiques sont constitués d'un embout cylindrique métallique creux et les moyens de fixation desdites deuxièmes fibres sont démontables.

D'autres caractéristiques et avantages de l'invention ressortiront mieux de la description qui va suivre, donnée à titre purement illustratif et non limitatif, en référence aux figures annexées, dans lesquelles :

la figure 1 déjà décrite, représente schématiquement une partie d'un dispositif de raccordement de l'art antérieur,

la figure 2 représente, en coupe longitudinale, une partie du dispositif de raccordement selon l'invention, illustrant le raccordement d'une première fibre optique à une deuxième fibre optique,

la figure 3 représente schématiquement, en coupe longitudinale, le dispositif selon l'invention raccordé à une caméra optoélectronique du type à fente comportant un tube convertisseur d'images muni d'un hublot de fibres optiques sur l'entrée de ladite caméra,

la figure 4 représente schématiquement, en perspective et après enlèvement d'une partie du boîtier du dispositif de raccordement, les deux guides et la troisième pièce assurant les positionnements des fibres optiques contenues dans le boîtier,

la figure 5 est une vue en bout représentant la troisième pièce et notamment la mise en place des fibres optiques dans les encoches formées dans cette pièce,

la figure 6 est une vue, en coupe longitudinale, représentant, sur la partie gauche, la mise en place des fibres optiques et des tiges de centrage dans les plots de la première pièce et, sur la partie droite, l'état de ces différentes pièces après polissage,

la figure 7 est une vue en bout d'un plot, de la fibre optique et des tiges de centrage correspondantes, et

la figure 8 représente schématiquement un ensemble permettant de détecter, d'enregistrer et d'analyser un phénomène physique au moyen d'une caméra optoélectronique, la transmission des signaux étant effectuée à l'aide d'un réseau de fibres optiques raccordé à la caméra au moyen d'un dispositif de raccordement conformément à l'invention.

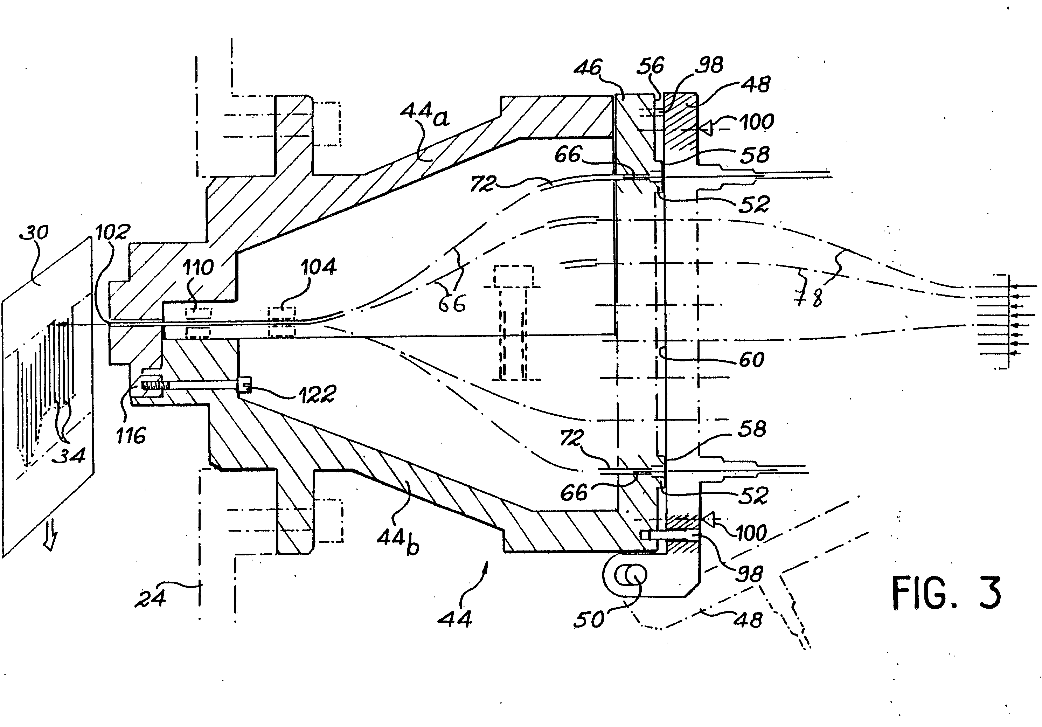

En se référant aux figures 2 et 3, le dispositif de l'invention est constitué d'une première pièce métallique 44 faisant partie d'un boîtier et comportant une partie 46 en forme de disque plat, et d'une deuxième pièce métallique 48 en forme de disque plat pouvant pivoter sur la première pièce autour d'un axe tel que 50.

Le disque plat 46 comporte n plots métalliques cylindriques 52 disposés chacun dans un alésage 53 pratiqué dans le disque 46. Ces plots 52 présentent une extrémité 54 qui fait saillie sur un côté 56 du disque plat 46 de façon à définir une face plane 58 sur laquelle peut venir s'appuyer l'une des faces 60 de la deuxième pièce 48, les faces planes 58 des plots 52 étant disposées dans un même plan. Ces plots métalliques 52, répartis sur l'ensemble du disque 46 de la première pièce, sont percés, en leur centre, d'un alésage 62 pouvant recevoir une extrémité 64 d'une première fibre optique 66. Ces premières fibres optiques 66 sont disposées au centre des alésages 62 de façon que l'extrémité 64 desdites fibres arrive en affleurement avec les faces planes 58 des plots métalliques 52.

Le centrage de ces premières fibres optiques 66 est obtenu par des moyens de centrage constitués par exemple par trois tiges métalliques cylindriques telles que 68. Ces tiges 68 sont placées dans les alésages 62 de façon qu'une extrémité 70 desdites tiges arrive en affleurement avec les faces planes 58 des plots métalliques 52, comme l'extrémité 64 des premières fibres optiques 66. Le positionnement de ces fibres optiques et de ces tiges dans les alésages 62 ainsi que la fixation desdites fibres optiques dans les plots 52 seront décrits ultérieurement.

Les premières fibres optiques 66 peuvent être, de plus, munies d'une gaine protectrice 72 entourant lesdites fibres sur toute leur longueur, excepté au niveau de l'extrémité 64 située au contact des tiges 68.

De même, la deuxième pièce 48 est munie de n alésages 74 pouvant recevoir, chacun, une extrémité 76 d'une deuxième fibre optique 78, ces alésages 74 étant répartis sur la pièce 48 de façon que chacun d'eux puisse être placé en regard de l'un des alésages 62 formés dans les plots métalliques 52 lorsque la face 60 de ladite deuxième pièce se trouve en contact avec les faces planes 58 des plots 52. Les deuxièmes fibres optiques 78 sont disposées au centre des alésages 74 de façon que l'extrémité 76 desdites fibres arrive en affleurement avec la face 60 de la deuxième pièce 48.

Le centrage de ces deuxièmes fibres optiques 78 est obtenu par des moyens de centrage constitués, par exemple par des embouts cylindriques métalliques creux 80 dans lesquels sont disposées les deuxièmes fibres optiques 78. Ces embouts 80 sont placés dans les alésages 74 de façon qu'une extrémité 83 desdits embouts arrive en affleurement avec la face 60 de la deuxième pièce 48, comme l'extrémité 76 des deuxièmes fibres optiques 78.

Ces deuxièmes fibres optiques 78 qui doivent pouvoir être montées et démontées facilement sont maintenues en place dans les alésages 74 par des moyens de fixation démontables tels que 82. Ces moyens de fixation 82 qui permettent aussi le maintien en place des embouts 80 dans les alésages 74 peuvent être constitués par exemple de deux pièces en coin 84 situées de part et d'autre des deuxièmes fibres optiques et en butée avec l'autre extrémité 86 des embouts 80, ces pièces en coin 84 étant maintenues par un écrou 88 venant se visser sur l'extrémité 86 des embouts 80 et présentant une surface tronconique en appui sur les pièces 84. Le vissage de cet écrou 88 permet de comprimer les deuxièmes fibres optiques 78 et donc de les maintenir en place. Bien entendu, d'autres moyens de fixation démontables peuvent être envisagés.

Les deuxièmes fibres optiques 78 peuvent être munies, de plus, d'une gaine de protection 90 entourant lesdites fibres sur toute leur longueur excepté au niveau de l'extrémité 76 située dans les embouts 80.

De plus, la deuxième pièce 48 peut être associée à une autre pièce 92 en forme de disque plat solidaire de ladite deuxième pièce et munie d'ouvertures 94 permettant le passage des moyens de fixation 82. Cette pièce 92, au niveau desdites ouvertures, peut être munie d'une partie en saillie 96 permettant de maintenir en position l'écrou 88 des moyens de fixation 82.

Par ailleurs, le dispositif, selon l'invention, comprend des moyens permettant de positionner la deuxième pièce 48 par rapport à la première pièce 44. Ces moyens peuvent par exemple être constitués par deux doigts de guidage 98 diamétralement opposés, permettant de positionner la deuxième pièce 48 de façon que les n alésages 74 de ladite deuxième pièce puissent être placés en regard des n alésages 62 formés dans les plots métalliques 52 de la première pièce. Le dispositif comprend, de plus, des moyens permettant de maintenir solidaires la première pièce 44 et la deuxième pièce 48 ; ces moyens, de type classique, sont représentés schématiquement sous la référence 100.

Du fait de sa constitution, le dispositif selon l'invention peut être nettoyé facilement ; les extrémités des fibres optiques mises au contact l'une de l'autre doivent être souvent nettoyées afin de ne pas modifier les caractéristiques de transmission de ces fibres.

De plus, dans certains cas, ce dispositif constitué de deux pièces amovibles peut être démonté rapidement et le nettoyage effectué lorsque le raccordement des fibres optiques est réalisé ; ce qui n'est pas le cas pour les dispositifs de l'art antérieur.

Comme on l'a dit précédemment, la première pièce 44 du dispositif constitue le boîtier du dispositif de raccordement dans lequel sont logées les n premières fibres optiques 66 munies de leur gaine protectrice 72. De façon à positionner aisément lesdites fibres optiques dans le boîtier 44, celui-ci peut être constitué en deux parties 44a et 44b.

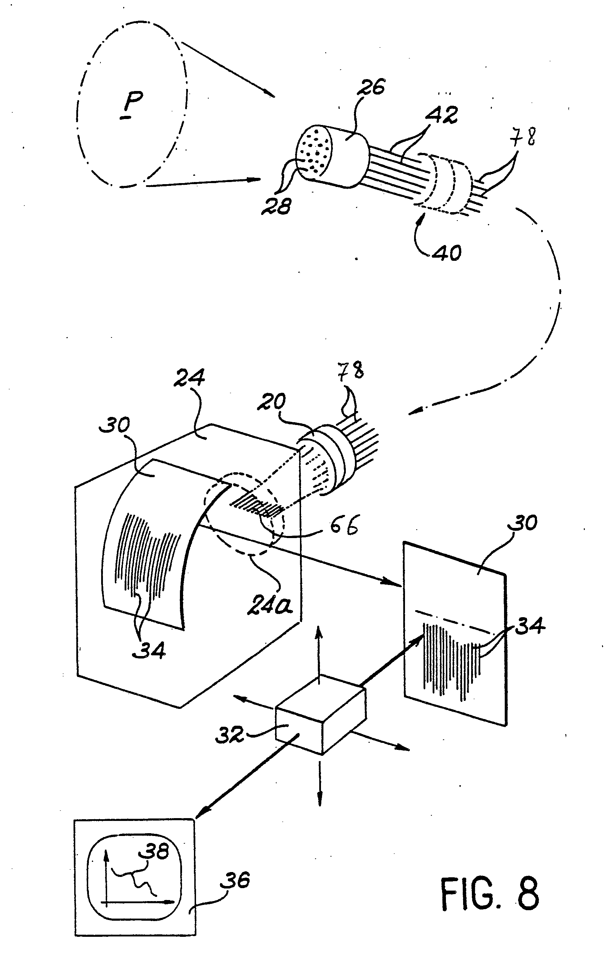

Le dispositif de raccordement comprend, de plus, des moyens permettant de disposer l'autre extrémité 102 des n premières fibres optiques 66 selon une même ligne droite de façon que lesdites autres extrémités 102 soient toutes disposées dans un même plan. Avec une caméra optoélectronique 24, du type à fente (figure 8), comprenant un tube convertisseur d'images, non représenté, muni sur son entrée d'un hublot de fibres optiques, on aligne en fait ladite autre extrémité 102 des n premières fibres 66 avec les extrémités des fibres optiques du hublot d'entrée du tube convertisseur d'images de caméra, ladite ligne droite constituant la fente d'entrée de ladite caméra.

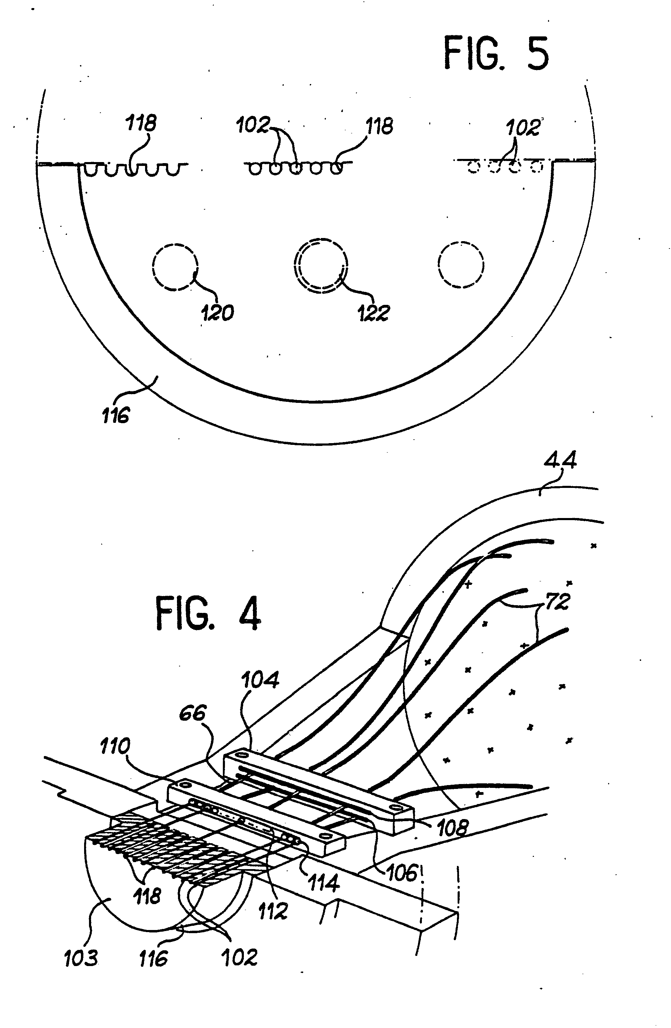

Ces moyens de positionnement, schématisés sur les figures 4 et 5, sont constitués d'un premier guide 104 (figure 4) muni de deux ouvertures parallèles 106 et 108 dans lesquelles sont placées les n premières fibres optiques 66 munies, alors, de leur gaine de protection 72, permettant, donc, de disposer lesdites fibres optiques suivant deux lignes parallèles et d'un deuxième guide 110 muni d'une seule ouverture 112 dans laquelle sont placés, dans un même plan des tubes 114 solidaires du deuxième guide, par exemple par collage, permettant de disposer lesdites fibres optiques 66 suivant une seule ligne droite et de bien les séparer les unes des autres, les fibres optiques étant, alors, mises à nu, c'est-à-dire dépouillées de leur gaine de protection 72. Ces deux guides 104 et 110 permettent de positionner les premières fibres optiques 66 de façon que les rayons de courbure de celle-ci soient acceptables et sensiblement identiques de manière à ne pas modifier les caractéristiques de transmission desdites fibres.

De plus, les moyens de positionnement de ces fibres optiques comprennent une troisième pièce métallique 116 en forme de demi-disque plat, solidaire de la première pièce 44 formant le boîtier du dispositif de raccordement et comportant n encoches 118 (figure 5) permettant de maintenir en place l'extrémité 102 des n premières fibres optiques 66 selon une même ligne droite afin de pouvoir notamment les aligner avec les extrémités des fibres optiques du hublot d'entrée du tube d'une caméra optoélectronique. Pour une telle caméra, la ligne droite constitue, en fait, la fente d'entrée de la caméra.

Les encoches 118, par exemple espacées régulièrement les unes des autres présentent de préférence en section, une forme semi-circulaire permettant un bon positionnement des premières fibres optiques 66. Les références 120 et 122 représentent, respectivement et schématiquement, les moyens permettant de positionner la troisième pièce 116 sur la première pièce 44 formant le boîtier du dispositif de raccordement et les moyens permettant de fixer ladite troisième pièce sur ladite première pièce.

On va maintenant décrire plus précisément le raccordement des différentes fibres optiques au moyen du dispositif de raccordement tel que décrit précédemment.

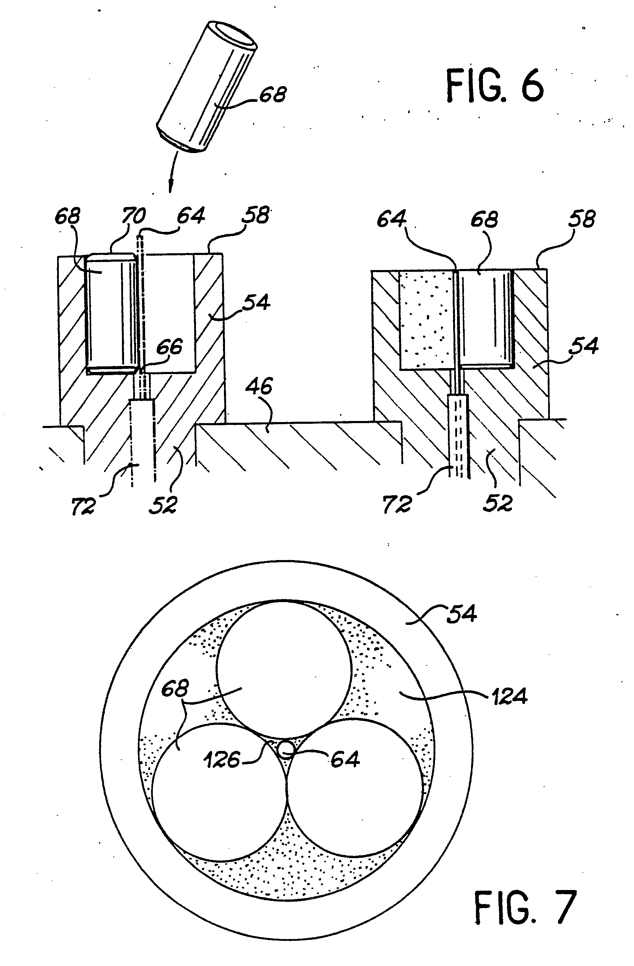

Pour raccorder les premières fibres optiques 66 aux deuxièmes fibres optiques 78, on positionne, tout d'abord, comme schématisé sur la partie gauche de la figure 6, les trois tiges 68, constituant les moyens de centrage des premières fibres optiques 66, puis les extrémités 64 desdites fibres, alors dénudées, de façon que l'extrémité 64 des premières fibres optiques 66 et l'extrémité 70 des tiges 68 arrivent en affleurement ou font légèrement saillie par rapport à la face plane 58 des plots métalliques 52, comme on l'a représenté de façon volontairement exagérée sur la partie gauche de la figure 6. On fixe ensuite les tiges 68 ainsi que lesdites fibres optiques 66.

La fixation des premières fibres optiques 66 ainsi que les tiges 68 est obtenue en remplissant, comme schématisé sur la figure 7, les espaces 124 compris entre les trois tiges 68 placées au contact l'une de l'autre et les espaces 126 compris entre lesdites fibres optiques et les tiges d'un adhésif tel qu'une colle présentant, après durcissement, un comportement similaire à celui desdites premières fibres optiques vis-à-vis d'un polissage.

Ensuite, comme représenté sur la partie droite de la figure 6, on polit simultanément la face plane 58 des plots métalliques 52, l'extrémité 64 des premières fibres optiques 66, l'extrémité 70 des trois tiges 68 ainsi que la colle. De façon à obtenir un polissage facile, les plots métalliques 52, et les tiges 68 doivent être réalisés en des matériaux présentant, comme la colle, un comportement similaire à celui desdites fibres optiques vis-à-vis dudit polissage.

Les plots 52 et les tiges 68 peuvent être réalisés en acier inoxydable pouvant contenir 13 % de chrome ; cet acier, afin d'obtenir un comportement similaire à celui des fibres optiques, peut être soumis à un traitement thermique, si nécessaire. L'adhésif utilisé peut être une résine époxy polymérisée par chauffage à une température voisine de 150 °C pendant environ 5 minutes. Les fibres optiques utilisées sont du type à saut d'indice ou à gradient d'indice et entièrement réalisées en silice.

Etant donné que les plots 52 présentent une partie 54 faisant saillie (figure 2) sur un côté 56 du disque plat 46 de la première pièce 44, les particules 19 formées lors du polissage peuvent être facilement éliminées, au moyen d'un nettoyage simple, de la face 54 des plot ainsi que de l'extrémité 64 des fibres optiques 66.

Puis, on positionne les deuxièmes fibres optiques 78 déjà munies des embouts métalliques 80 dans les alésages 74 de la deuxième pièce 48, de façon que l'extrémité 76 desdites fibres 78 et que l'extrémité 83 de ces embouts arrive au moins en affleurement avec la face plane 60 de la deuxième pièce 48. Le fait que les extrémités 76 desdites fibres 78 sont munies d'un embout métallique 80 facilite leur introduction dans les alésages 74.

De façon à faciliter le positionnement de ces deuxièmes fibres optiques, on peut, tout d'abord, positionner et fixer la deuxième pièce 48 sur la première pièce 44 à l'aide des moyens de positionnement 98 et des moyens de fixation 100, puis amener au contact de l'extrémité 64 des premières fibres optiques 66 l'extrémité 76 des deuxièmes fibres optiques 78 munie de l'embout 80, les premières fibres optiques ayant été au préalable fixées et polies. On fixe ensuite les deuxièmes fibres optiques à l'aide des moyens de fixation 82.

Comme on vient de le dire, les deuxièmes fibres optiques 78 sont positionnées dans les alésages 74 de la deuxième pièce 48, munies chacune de leur embout 80. La disposition des deuxièmes fibres optiques 78 dans les embouts 80 se fait en amenant l'extrémité 76 de chacune des fibres en affleurement avec l'extrémité 83 de l'embout 80 correspondant. Le maintien des deuxièmes fibres optiques 78 dans les embouts 80 se fait au moyen d'un adhésif tel qu'une colle présentant, après durcissement, un comportement similaire avec celui desdites deuxièmes fibres optiques vis-à-vis d'un polissage. On effectue ensuite un polissage simultané de l'extrémité 76 des deuxièmes fibres optiques, de l'extrémité 83 des embouts 80 ainsi que de la colle.

De façon à obtenir un polissage facile de l'extrémité 83 des embouts métalliques 80 et de l'extrémité 76 des deuxièmes fibres optiques 78, le matériau constituant les embouts doit présenter un comportement similaire vis-à-vis dudit polissage. En particulier, les embouts 80 peuvent être réalisés en laiton tandis que les fibres optiques sont en silice. Par ailleurs, le positionnement des deuxièmes fibres optiques se fait après avoir poli la face 60 de la deuxième pièce 48, ce polissage étant bien entendu effectué avant de fixer la deuxième pièce 48 sur la première pièce 44. De préférence, la deuxième pièce 48 sera réalisée en aluminium ou ses alliages, ces alliages étant ceux par exemple contenant, en plus de l'aluminium, du cuivre et du magnésium tels que les alliages connus sous le nom commercial de Duralumin.

Enfin, après fixation des deuxièmes fibres optiques 78, on peut séparer l'une de l'autre, la première pièce 44 et la deuxième pièce 48, afin de nettoyer tout le côté du disque 56 de ladite première pièce et toute la face 60 de ladite deuxième pièce. Après ce nettoyage simple, on repositionne et on refixe la deuxième pièce 48 sur la première pièce 44.

Pour permettre un bon alignement de l'extrémité 76 des deuxièmes fibres optiques 78 avec l'extrémité 64 des premières fibres optiques 66, afin d'obtenir une bonne transmission de la lumière entre les premières fibres et les deuxièmes fibres, on conçoit que l'axe de chacune des premières fibres et que l'axe de chacune des deuxièmes fibres à raccorder coïncident. Ceci peut être réalisé en utilisant, bien entendu, des fibres optiques 66 et 78, des embouts 80, des tiges 68 et des plots 52 bien calibrés et en effectuant, à l'aide d'un système approprié, les alésages 53 dans la première pièce 44 et les alésages 74 dans la deuxième pièce 48 de façon que les axes des alésages 53 coïncident avec ceux des alésages 74.

On va maintenant décrire la façon de raccorder ladite autre extrémité 102 des premières fibres optiques 66 à l'entrée de la caméra du type à fente.

Ladite autre extrémité 102 des premières fibres optiques 66 est positionnée dans les deux guides 104 et 110 puis dans les encoches 118 de façon que lesdites extrémités 102 arrivent au moins en affleurement avec la face 103 de la pièce 116 devant être placée à l'entrée de la caméra. Dans le cas d'une caméra optoélectronique, la face 103 de la troisième pièce 116 sera placée au contact du hublot de fibres optiques constituant l'entrée du tube convertisseur d'images d'une telle caméra.

Puis, on fixe cette extrémité 102 desdites premières fibres optiques 66 dans les encoches 118 au moyen d'un adhésif tel qu'une colle présentant après durcissement un comportement similaire à celui desdites fibres vis-à-vis d'un polissage. Enfin, on polit simultanément la face 103 de la pièce 116 et l'extrémité 102 des fibres optiques ainsi que la colle. De façon à obtenir les qualités d'un poli optique, la troisième pièce 116 dans laquelle sont effectuées les encoches 118 doit être réalisée en un matériau présentant, comme la colle, un comportement similaire vis-à-vis du polissage. En particulier, ladite troisième pièce 116 peut être réalisée en acier inoxydable de type X13 et l'adhésif peut être une résine époxy polymérisée par chauffage à une température voisine de 150 °C pendant environ 5 minutes, les fibres optiques étant des fibres optiques à saut d'indice ou à gradient d'indice réalisées entièrement en silice.

De façon pratique, le boîtier 44 du dispositif de raccordement à une caméra du type à fente 24, muni des premières fibres optiques 66 est monté à demeure sur ladite caméra, la deuxième pièce 48 munie des deuxièmes fibres optiques 78 n'étant fixée sur ledit boîtier que lorsque l'on désire étudier un phénomène physique.

A cet effet, on peut utiliser un ensemble de mesure tel que schématisé sur la figure 8. Cet ensemble de mesure est constitué par un dispositif de raccordement tel que décrit précédemment et portant la référence 20, permettant le raccordement de fibres optiques 78, réparties sur toute la surface du dispositif 20, sur une caméra 24 du type optoélectronique comportant un tube convertisseur d'images muni sur son entrée d'un hublot 24a de fibres optiques. Le raccordement de ces fibres optiques 78 sur l'entrée du tube de la caméra 24 se fait par l'intermédiaire d'autres fibres optiques 66 amenées au moyen du dispositif de raccordement 20 sous la forme d'une même ligne droite constituant la fente de la caméra. Les fibres optiques 78, reliées à un dispositif de mesure 26 muni de plusieurs sondes de mesure 28, réparties sur toute la surface du dispositif de mesure permettent l'enregistrement de certains phénomènes physiques P comme par exemple l'enregistrement de manière continue du déplacement d'une pièce projetée à grande vitesse. L'enregistrement de ces phénomènes est effectué par la caméra 24 du type optoélectronique au moyen d'un film photographique 30 qui sera ultérieurement développé puis analysé au moyen d'un dispositif approprié 32 comportant, entre autres, un calculateur non représenté.

Cet ensemble permet l'enregistrement et l'étude d'un phénomène physique en plusieurs points de l'espace ; les traces 34 obtenues sur le film 30 correspondent, chacune, à la mesure dudit phénomène en chacun de ces points. L'analyse de ces traces est une analyse densitométrique permettant d'obtenir un signal analogique donnant la densité optique en fonction du temps.

L'analyse complète du phénomène physique peut être reproduite sur un oscilloscope tel que 36 ; la référence 38 correspond à cette analyse.

L'utilisation d'un tel ensemble (caméra, dispositif de raccordement, fibres optiques) permet d'effectuer simultanément n mesures. Dans cet ensemble, la caméra joue le rôle d'un oscillographe multi-synchrotraces à grande capacité. En effet, des études de phénomènes physiques ont été effectuées avec 54 sondes de mesures associées à la caméra. Cet ensemble joue donc le rôle de 54 voies de mesure associées chacune à un oscilloscope.

Au cas où la caméra est située très loin du phénomène P à étudier, les fibres optiques 78, au lieu d'être reliées directement au dispositif de mesure 26, peuvent être reliées à celui-ci par l'intermédiaire d'un connecteur 40 de type classique, et de fibres optiques telles que 42.

L'étude d'un phénomène physique au moyen des traces 34 enregistrées sur le film 30 se fait en comparant les traces obtenues à une trace de référence caractéristique de la voie de mesure utilisée, c'est-à-dire des fibres optiques 66 et 78 la constituant.

De plus, l'étude du phénomène physique, donc l'analyse des traces 34 enregistrées sur le film 30 de la caméra 24 sera facilitée si les traces sont régulièrement espacées et parallèles entre elles, c'est-à-dire si les encoches 118 effectuées dans la troisième pièce 116 sont régulièrement espacées. En effet, cette étude pourra être faite par une incrémentation directe à partir de l'une des traces, sans recherche préalable de la position de chacune des autres traces.

Par ailleurs, on sait que l'étude de phénomènes physiques de type explosif conduit, du fait de l'onde de choc, à la destruction d'une grande partie de l'ensemble de mesure utilisé, ce qui entraîne une longue et fastidieuse réinstallation de tout l'ensemble de mesure. Avec le dispositif de l'invention, il suffit uniquement de changer les deuxièmes fibres optiques endommagées qui relient les sondes de mesure aux premières fibres optiques logées dans le boîtier du dispositif ainsi que les sondes de mesure. Etant donné la constitution du dispositif, le changement des fibres optiques endommagées se fait de façon très rapide.

**Revendications**

1. Dispositif de raccordement pour amener, au moyen de fibres optiques (78, 66), une pluralité de signaux optiques de mesure en provenance d'une pluralité de points de l'espace (28) à l'entrée d'une caméra (24) optoélectronique à balayage de fente, cette caméra comportant à l'entrée un hublot de fibres optiques (24a), caractérisé en ce que ledit dispositif de raccordement comprend :

un boîtier métallique (44) destiné à être monté sur la caméra et dans lequel sont logées n premières fibres optiques (66), ce boîtier comprenant une première et une seconde parois planes (46, 116) opposées entre lesquelles s'étendent lesdites premières fibres, la première paroi (46) en forme de disque étant munie de n alésages (53) dans lesquels sont montés des plots métalliques cylindriques (52) dont une extrémité (54) fait saillie sur le côté extérieur (56) de la première paroi (46) pour définir une face plane (58), lesdites faces planes (58) étant toutes disposées dans un même plan, ces n plots, répartis sur l'ensemble de la première paroi (46) et percés en leur centre d'un alésage (62) recevant une première extrémité (64) de l'une des n premières fibres optiques (66) venant en affleurement avec ladite face plane (58), la seconde paroi (116) formée de deux demi-disques étant destinée à être montée en regard du hublot d'entrée (24a) de ladite caméra (24), l'un des demi-disques étant muni de n encoches (118), espacées régulièrement les unes des autres, permettant de positionner et de maintenir la seconde extrémité (102) desdites premières fibres (66) selon une même ligne droite, cette ligne droite en regard du hublot d'entrée (24a) constituant la fente d'entrée de la caméra (24) ;

des moyens (68) permettant le centrage de la première extrémité (64) des premières fibres optiques (66) dans les alésages (62) des plots, et des moyens permettant de fixer lesdites premières fibres (66) dans les plots (52), ces moyens de centrage (68) présentant une extrémité (70) venant en affleurement avec la face plane (58) du plot (52) associé, les matériaux constituant les plots (52), les moyens de centrage (68) et les moyens de fixation présentant un comportement similaire à celui des premières fibres optiques (66) vis-à-vis d'un polissage ;

des moyens de positionnement (104, 110) servant à amener la seconde extrémité (102) des premières fibres optiques (66) selon ladite ligne droite ;

une pièce métallique (48) en forme de disque plat destinée à être montée sur le boîtier (44) en regard de la première paroi (46) dudit boîtier, l'une des faces (60) de cette pièce métallique (48) étant apte à venir au contact des faces planes (58)

des plots, cette pièce métallique étant munie de n alésages (74) recevant, chacun une extrémité (76) d'une fibre d'un ensemble de n deuxièmes fibres optiques (78) dont les autres extrémités sont destinées à recevoir lesdits signaux optiques de mesure, lesdites extrémités de fibres reçues dans lesdits alésages (74) venant en affleurement avec la face (60) de ladite pièce qui est située en regard du boîtier, chacun de ces alésages (74) étant réparti sur ladite pièce métallique (48) de façon à pouvoir être placé en regard de l'un des alésages (62) formés dans lesdits plots (52) de la première paroi (46) dudit boîtier (44) ;

des moyens (80) permettant le centrage des deuxièmes fibres optiques (78) dans les alésages (74) de ladite pièce métallique et des moyens (82) permettant de fixer de manière démontable lesdites deuxièmes fibres, lesdits moyens de centrage (80) présentant une extrémité (83) venant en affleurement avec la face (60) de ladite pièce (48) située en regard dudit boîtier ;

des moyens (98) permettant de positionner ladite pièce métallique (48) en regard de la première paroi (46) du boîtier (44), de façon que les n alésages (74) de ladite pièce puissent être placés en regard des n alésages (62) formés dans les plots (52) de ladite première paroi du boîtier ; et,

des moyens (100) permettant de maintenir solidaires le boîtier métallique (44) et la pièce métallique (48).

2. Dispositif selon la revendication 1, caractérisé en ce que les moyens de positionnement de la seconde extrémité (102) desdites premières fibres comprennent un premier guide (104) permettant de disposer les n premières fibres optiques (66) suivant deux lignes parallèles, puis un deuxième guide (110) permettant de disposer lesdites fibres suivant une même ligne droite.

3. Dispositif selon l'une quelconque des revendications 1 et 2, caractérisé en ce que les n encoches (118) présentent en section une forme semi-circulaire.

4. Dispositif selon l'une quelconque des revendications 1 à 3, caractérisé en ce que les premières fibres (66) optiques sont munies d'une gaine de protection (72) sur au moins une partie de leur longueur.

5. Dispositif selon l'une quelconque des revendications 1 à 4, caractérisé en ce que les moyens de centrage (68) des premières fibres optiques (66) sont constitués de trois tiges métalliques cylindriques, régulièrement réparties dans les alésages (62) des plots (52), et en ce que les moyens de fixation desdites premières fibres sont constitués par un adhésif présentant un comportement similaire à celui des deuxièmes fibres optiques vis-à-vis d'un polissage.

6. Dispositif selon l'une quelconque des revendications 1 à 5, caractérisé en ce que les moyens de centrage (80) des deuxièmes fibres optiques (78) sont constitués d'un embout cylindrique métallique creux.

7. Dispositif selon l'une quelconque des revendications 1 à 6, caractérisé en ce que les moyens de fixation démontable (82) des deuxièmes fibres optiques (78) sont constitués d'un écrou de forme tronconique (88) pouvant comprimer lesdites fibres par l'intermédiaire d'au moins une pièce en coin (84).

8. Dispositif selon les revendications 5 et 6, caractérisé en ce que les plots (52) et les tiges (68) sont en acier inoxydable et les embouts (80) en laiton.

9. Dispositif selon l'une quelconque des revendications 1 à 8, caractérisé en ce que le boîtier métallique (44) et la pièce métallique (48) sont réalisés en un matériau choisi dans le groupe comprenant l'aluminium et ses alliages.

10. Dispositif selon l'une quelconque des revendications 1 à 9, caractérisé en ce que la seconde paroi (116) du boîtier (44) est réalisée en acier inoxydable.

**Claims**

1. Connecting device for guiding, by means of optical fibres (78, 66), a plurality of optical measurement signals originating from a plurality of points in space (28) to the entrance of a slit-scanning opto-électronic camera (24), this camera including an optical fibre port (24a) at the entrance, characterized in that the said connecting device comprises :

a metallic casing (44) intended to be mounted on the camera and in which n first optical fibres (66) are accommodated, this casing including a first plane wall and a second plane wall (46, 116) opposite one another, between which the said first fibres extend, the first wall (46) in the form of a disk being provided with n bores (53) in which there are mounted cylindrical metallic contacts (52), one end (54) of which projects on the exterior (56) of the first wall (46) to define a plane face (58), the said plane faces (58) all being disposed in a single plane, these n contacts, distributed over the entire first wall (46) and pierced at their centre by a bore (62) receiving a first end (64) of one of the n first optical fibres (66) being flush with the said plane face (58), the second wall (116) formed by two semi-disks being intended to be mounted to face the entrance port (24a) of the said camera (24), one of the semi-disks being provided with n notches (118) regularly spaced from one another, permitting the second end (102) of the sait first fibres (66) to be positioned and maintained in a single straight line, this traight line facing the entrance port (24a) constituting the entrance slit of the camera (24) ;

means (68) permitting the centring of the first end (64) of the first optical fibres (66) in the bores (62) of the contacts, and means permitting fixing of the said first fibres (66) in the contacts (52), these centring means (68) exhibiting an end (70) flush with the plane face (58) of the associated contact (52), the materials constituting the contacts (52), the centring means (68) and the fixing means exhibiting a behaviour similar to that of the first optical fibres (66) in relation to polishing ;

positioning means (104, 110) serving to guide the second end (102) of the first optical fibres (66) according to the said straight line ;

a metallic component (48) which is in the form of a flat disk ans which is intended to be mounted on the casing (44) facing the first wall (46) of the said casing, one of the faces (60) of this metallic component (48) being capable of coming into contact with the plane faces (58) of the contacts, this metallic component being provided with n bores (74) each receiving one end (76) of a fibre of an assembly of n second optical fibres (78), the other ends of which are intended to receive the said optical measurement signals, the said ends of fibres received in the said bores (74) being flush with the face (60) of the said component which is situated to face the casing, each one of these bores (74) being distributed over the said metallic component (48) in such a manner as to be able to be placed to face one of the bores (62) formed in the said contacts (52) of the first wall (46) of the said casing (44) ;

means (80) permitting the centring of the second optical fibres (78) in the bores (74) of the said metallic component and means (82) permitting the demountable fixing of the said second fibres, the said centring means (80) exhibiting one end (83) flush with the face (60) of the said component (48) situated to face the said casing ;

means (98) permitting the positioning of the said metallic component (48) to face the first wall (46) of the casing (44), in such a manner that the n bores (74) of the said component may be placed to face the n bores (62) formed in the contacts (52) of the said first wall of the casing ; and

means (100) permitting the maintenance of the metallic casing (44) and the metallic component (48) in a single unit.

2. Device according to claim 1, characterized in that the means for positioning the second end (102) of the said first fibres comprise a first guide (104) permitting the n first optical fibres (66) to be disposed in two parallel lines, a second guide (110) then permitting the said fibres to be disposed in a single straight line.

3. Device according to either one of claims 1 and 2, characterized in that the n notches (118) exhibit, in section, a semi-circular shape.

4. Device according to any one of claims 1 to 3, characterized in that the first optical fibres (66) are provided with a protective sheath (72) over at least a part of their length.

5. Device according to any one of claims 1 to 4, characterized in that the means (68) for centring the first optical fibres (66) comprise three cylindrical metallic rods regularly distributed in the bores (62) of the contacts (52), and in that the means for fixing the said first fibres comprise and adhesive exhibiting a behaviour similar to that of the second optical fibres in relation to polishing.

6. Device according to any one of claims 1 to 5, characterized in that the means (80) for centring the second optical fibres (78) comprise a hollow metallic cylindrical tip.

7. Device according to any one of claims 1 to 6, characterized in that the means (82) for the demountable fixing of the second optical fibres (78) comprise a nut (88) of tapering shape, which can compress the said fibres through at least one wedge (84).

8. Device according to claims 5 and 6, characterized in that the contacts (52) and the rods (68) are constructed of stainless steel and the tips (80) of brass.

9. Device according to any one of claims 1 to 8, characterized in that the metallic casing (44) and the metallic component (48) are produced in a material selected from the group comprising aluminium and its alloys.

10. Device according to any one of claims 1 to 9, characterized in that the second wall (116) of the casing (44) is produced in stainless steel.

**Patentansprüche**

1. Verbindungsvorrichtung zum Zuleiten mittels optischer Fasern (78, 66) einer Mehrzahl optischer Meßsignale von einer Mehrzahl von Raumpunkten (28) zum Eingang einer optoelektronischen Kamera (24) mit Schlitzabtastung, wobei diese Kamera am Eingang ein Fenster aus optischen Fasern (24a) aufweist, dadurch gekennzeichnet, daß die Verbindungseinrichtung umfaßt :

einen Metallbehälter (44) zur Montage an der Kamera, in welchem n erste optische Fasern (66) untergebracht sind, wobei dieser Behälter eine erste und eine zweite einander gegenüberstehende Wand (46, 116) aufweist, zwischen welchen sich die genannten ersten Fasern erstrecken, wobei die erste Wand (46) in Form einer Scheibe mit n Bohrungen (53) versehen ist, in denen zylindrische Metallbuchsen (52) montiert sind, von denen ein Ende (54) über die Außenseite (56) der ersten Wand (46) vorsteht, um eine ebene Fläche (58) zu bilden, wobei diese ebenen Flächen (58) sämtlich in der gleichen Ebene liegen, die n Buchsen, die über die ganze erste Wand (46) verteilt sind und in ihrer Mitte von einer Bohrung (62) durchdrungen sind, ein erstes Ende (64) von einer der n ersten optischen Fasern (66) aufnehmen, die bündig mit der genannten ebenen Fläche (58) abschließen, die zweite Wand (116) von zwei Halbscheiben gebildet ist, die dazu bestimmt sind, gegenüber dem Eintrittsfenster (24a) der genannten Kamera (24) montiert zu werden, wobei die eine der Halbscheiben mit n Vertiefungen (118) versehen ist, die regelmäßige Abstände voneinander haben und es erlauben, das zweite Ende (102) der genannten ersten Fasern (66) auf einer gleichen, geraden Linie zu halten, wobei diese gerade Linie gegenüber dem Eintrittsfenster (24a) den Eintrittsschlitz der Kamera (24) bildet ;

Einrichtungen (68), die die Zentrierung des ersten Endes (64) der ersten optischen Fasern (66) in den Bohrungen (62) der Buchsen erlauben, und Einrichtungen, die es erlauben, die genannten ersten Fasern (66) in den Buchsen (52) festzulegen, wobei diese Zentriereinrichtungen (68) ein Ende (70) aufweisen, das mit der ebenen Fläche (58) der zugehörigen Buchse (52) bündig abschließt, die Materialien, die die Buchsen (52), die Zentriereinrichtungen (68) und die Befestigungseinrichtungen bilden, gleiche Verhaltensweisen beim Polieren zeigen, wie das der ersten optischen Fasern (66) ;

Positioniereinrichtungen (104, 110), die dazu dienen, das zweite Ende (102) der ersten optischen Fasern (66) längs der genannten geraden Linie zu führen ;

ein Metallstück (48) in Form einer flachen Scheibe, das dazu bestimmt ist, auf dem Behälter (44) gegenüber der ersten Wand (46) des Behälters montiert zu werden, wobei eine der Flächen (60) dieses Metallstücks (48) dazu eingerichtet ist, in Berührung mit den ebenen Flächen (58) der Buchsen zu treten, dieses Metallstück mit n Bohrungen (74) versehen ist, die jeweils ein Ende (76) einer Faser einer Gruppe von n zweiten optischen Fasern (78) aufnehmen, deren andere Enden dazu bestimmt sind, die genannten optischen Meßsignale zu empfangen, wobei die in den Bohrungen (74) aufgenommenen Faserenden bündig mit der Fläche (60) des genannten Stücks abschließen, das dem Behälter gegenübersteht, wobei jede dieser Bohrungen (74) auf dem genannten Metallstück (48) derart angeordnet ist, daß es einer der Bohrungen (62) in den genannten Buchsen (52) der ersten Wand (46) des Behälters (44) gegenübergestellt werden kann ;

Einrichtungen (80), die die Zentrierung der zweiten optischen Fasern (78) in den Bohrungen (74) des genannten Metallstücks ermöglichen, und Einrichtungen (62), die die lösbare Befestigung der genannten zweiten Fasern gestatten, wobei die Zentriereinrichtungen (80) ein Ende (83) aufweisen, das mit der Fläche (60) des genannten Stückes (48) gegenüber dem Behälter bündig abschließt ;

Einrichtungen (98), die es erlauben, das genannte Metallstück (48) der ersten Wand (46) des Behälters (44) so gegenüberzustellen, daß die n Bohrungen (74) des genannten Stücks den n Bohrungen (62) in den Buchsen (52) der genannten ersten Wand des Behälters gegenübergestellt werden können ; und,

Einrichtungen (100), die es erlauben, den Metallbehälter (44) und das Metallstück (48) aneinander festzuhalten.

2. Vorrichtung nach Anspruch 1, dadurch gekennzeichnet, daß die Positioniereinrichtungen für das zweite Ende (102) der genannten ersten Fasern eine erste Führung (104) aufweisen, die es ermöglicht, die n ersten optischen Fasern (66) entsprechend zweier paralleler Linien anzuordnen, und weiterhin eine zweite Führung (110) enthalten, die es erlaubt, die genannten Fasern auf einer einzigen geraden Linie anzuordnen.

3. Vorrichtung nach einem der Ansprüche 1 und 2, dadurch gekennzeichnet, daß die n Vertiefungen (118) einen halbkreisförmigen Querschnitt aufweisen.

4. Vorrichtung nach einem der Ansprüche 1 bis 3, dadurch gekennzeichnet, daß die ersten optischen Fasern (66) mit einer Schutzhülle (72) auf wenigstens einen Teil ihrer Länge versehen sind.

5. Vorrichtung nach einem der Ansprüche 1 bis 4, dadurch gekennzeichnet, daß die Zentriereinrichtungen (68) der ersten optischen Fasern (66) von drei zylindrischen Metallstiften gebildet sind, die in den Bohrungen (62) der Buchsen (52) regelmäßig verteilt sind, und daß die Befestigungseinrichtungen der ersten Fasern von einem Klebstoff gebildet sind, der beim Polieren ein Verhalten zeigt, das ähnlich dem der zweiten optischen Fasern ist.

6. Vorrichtung nach einem der Ansprüche 1 bis 5, dadurch gekennzeichnet, daß die Zentriereinrichtungen (80) der zweiten optischen Fasern (78) von einem zylindrischen, hohlen Metallansatz gebildet sind.

7. Vorrichtung nach einem der Ansprüche 1 bis 6, dadurch gekennzeichnet, daß die Einrichtungen (82) zum lösbaren Befestigen der zweiten optischen Fasern (78) von einer kegelstumpfförmigen Mutter (88) gebildet sind, die die genannten Fasern mittels wenigstens eines Keilstücks (84) zusammendrücken kann.

8. Vorrichtung nach einem der Ansprüche 5 und 6, dadurch gekennzeichnet, daß die Buchsen (52) und die Stifte (68) aus Edelstahl und die Ansätze (80) aus Messing bestehen.

9. Vorrichtung nach einem der Ansprüche 1 bis 8, dadurch gekennzeichnet, daß der Metallbehälter (44) und das Metallstück (48) aus einem Material hergestellt sind, das aus der Gruppe gewählt ist, die Aluminium und seine Legierungen enthält.

10. Vorrichtung nach einem der Ansprüche 1 bis 9, dadurch gekennzeichnet, daß die zweite Wand (116) des Behälters (44) aus Edelstahl hergestellt ist.

FIG. 1

FIG. 2

FIG. 3

0 061 955

FIG. 5

118

102

118

102

120

122

116

44

72

FIG. 4

104

66

110

108

118

112

114

106

103

116

102

# FIG. 6

68

68 70 64 58
54
66
46
72 52

64 68 58
54
72 52

# FIG. 7

54
124
68
126 64

FIG. 8